# EUROPEAN PATENT APPLICATION

(11) **EP 4 768 192 A1**
(43) Date of publication of application: **01.07.2026**
(21) Application number: 25227074.9
(22) Date of filing: 23.12.2025
(51) Int. Cl.: B25J 5/00, B25J 19/02, B64G 4/00

(54) **ROVER SYSTEMS, DEVICES, AND METHODS FOR PAYLOAD POSITIONING**

(30) Priority: 24.12.2024 US 202463738539 P
(71) Applicant: MacDonald, Dettwiler and Associates Inc., Brampton, Ontario L6Y 6K7 (CA)
(72) Inventor: REHMATULLAH, Faizan, Brampton, L6Y 6K7 (CA); LYMER, John Douglas, Brampton, L6Y 6K7 (CA); ALLEN, Andrew Charles MacKenzie, Brampton, L6Y 6K7 (CA); WAGNER, Devan Lewis, Brampton, L6Y 6K7 (CA); OLMEDO CASTRO, Nicolas Alejandro, Brampton, L6Y 6K7 (CA); WATSON, William, Brampton, L6Y 6K7 (CA)
(74) Representative: Mewburn Ellis LLP

(57) **Abstract**

Provided is a system, method and device for payload positioning. The system includes a rover configured to travel to a site and hold the payload, a sensor module attached to the rover for obtaining sensor data of the site, a robotic arm for equipping and stowing away the sensor module, attaching to a connection point of the payload, and controlling a position of the payload when attached to the connection point.

## Description

### Technical Field

The following relates generally to rover systems, and more particularly to systems and methods for payload positioning.

### Introduction

There may be a need for an improved system and method for payload positioning that overcomes at least some of the disadvantages of existing systems and methods.

### Summary

Provided is a system, method and device for payload positioning. The system includes a rover configured to travel to a site and hold the payload, a sensor module attached to the rover for obtaining sensor data of the site, a robotic arm for equipping and stowing away the sensor module, attaching to a connection point of the payload, and controlling a position of the payload when attached to the connection point.

The system may include, for example, a camera module attached to the robotic arm for obtaining visual data of the site.

The system may include a control system for performing navigation of the rover based on the sensor data and the visual data.

The connection point may provide power and data.

The robotic arm may include an end effector for attaching the sensor module.

The capture envelope may be underneath the payload.

The system may include a cargo module that has cargo legs for raising or lowering the cargo module.

The cargo module may include sensors that indicate an extension of the cargo legs.

The robotic arm may not take the load of the cargo module.

The robotic arm may provide a redundant measurement of relative cargo module pose with respect to the platform.

The robotic arm may assess any one or more of power, telemetry, and state of health of any one or more parameters via a connection point.

The parameters may include any one or more of temperature, temperature history, internal pressure, battery levels, dosimetry, shock levels, and state of redundant functions.

The parameters may include attitude (roll, pitch) with respect to the rover and ground.

The payload may include motors but no on board power.

The system may further include two or more rovers that transport a one payload.

Provided is a method for berthing a cargo module to a habitat on a surface. The method includes arriving at the habitat by a robotic system, wherein the cargo module is coupled to the robotic system, attaching a sensor module to a robotic arm of the robotic system, acquiring a pose of the habitat using the sensor module, moving the robotic system into a capture envelope of the habitat based on the pose of the habitat, stowing away the sensor module, grappling the cargo module with the robotic arm at a connection point of the cargo module, deploying legs of the cargo module, wherein the legs are configured to support the cargo module on the surface, releasing the cargo module at the connection point, and inspecting alignment of the cargo module and the habitat.

Provided is a method for acquiring a cargo payload. The method includes arriving at the cargo payload by a robotic system, attaching a sensor module to a robotic arm of the robotic system, acquiring a pose of the cargo payload using the sensor module, moving the robotic system into a capture envelope of the cargo payload based on the pose of the cargo payload, stowing away the sensor module, grappling the cargo module with the robotic arm at a connection point of the cargo module, and lowering the cargo module onto the robotic system.

Other aspects and features will become apparent to those ordinarily skilled in the art, upon review of the following description of some exemplary embodiments.

### Brief Description of the Drawings

The drawings included herewith are for illustrating various examples of articles, methods, and apparatuses of the present specification. In the drawings:
Figure 1 is a schematic diagram of a robotic system for positioning a payload, according to an embodiment.
Figure 2 is a schematic diagram of the robotic system of Figure 1 for berthing a payload to a habitat.
Figure 3 is a flow diagram of a method of positioning a payload for capture by a habitat.
Figures 4A-4C are flow diagrams of a method of positioning a payload on the robotic system of Figure 1.
Figures 5A-5D are flow diagrams of a method of berthing a payload to a habitat by the robotic system of Figure 1.

### Detailed Description

Various apparatuses or processes will be described below to provide an example of each claimed embodiment. No embodiment described below limits any claimed embodiment and any claimed embodiment may cover processes or apparatuses that differ from those described below. The claimed embodiments are not limited to apparatuses or processes having all of the features of any one apparatus or process described below or to features common to multiple or all of the apparatuses described below.

One or more systems described herein may be implemented in computer programs executing on programmable computers, each comprising at least one processor, a data storage system (including volatile and non-volatile memory and/or storage elements), at least one input device, and at least one output device. For example, and without limitation, the programmable computer may be a programmable logic unit, a mainframe computer, server, and personal computer, cloud-based program or system, laptop, personal data assistance, cellular telephone, smartphone, or tablet device.

Each program is preferably implemented in a high-level procedural or object-oriented programming and/or scripting language to communicate with a computer system. However, the programs can be implemented in assembly or machine language, if desired. In any case, the language may be a compiled or interpreted language. Each such computer program is preferably stored on a storage media or a device readable by a general or special purpose programmable computer for configuring and operating the computer when the storage media or device is read by the computer to perform the procedures described herein.

A description of an embodiment with several components in communication with each other does not imply that all such components are required. On the contrary, a variety of optional components are described to illustrate the wide variety of possible embodiments of the present invention.

Further, although process steps, method steps, algorithms or the like may be described (in the disclosure and / or in the claims) in a sequential order, such processes, methods and algorithms may be configured to work in alternate orders. In other words, any sequence or order of steps that may be described does not necessarily indicate a requirement that the steps be performed in that order. The steps of processes described herein may be performed in any order that is practical. Further, some steps may be performed simultaneously.

When a single device or article is described herein, it will be readily apparent that more than one device / article (whether or not they cooperate) may be used in place of a single device / article. Similarly, where more than one device or article is described herein (whether or not they cooperate), it will be readily apparent that a single device / article may be used in place of the more than one device or article.

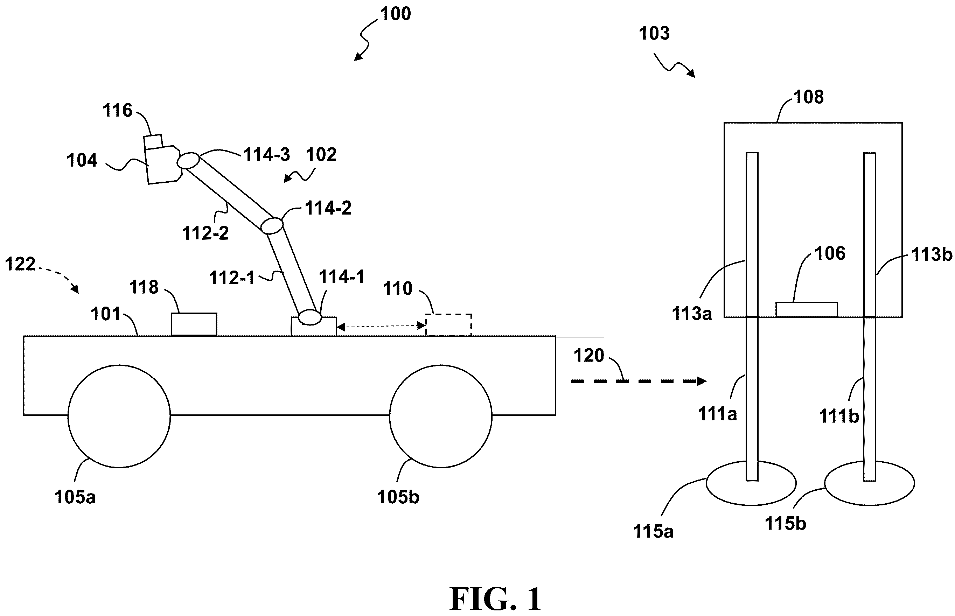

Referring now to Figure 1, shown therein is a robotic system 100 for positioning a payload, according to an exemplary embodiment. The robotic system 100 is coupled to a platform 101 (also referred to as a rover 101). In a space-based application, the platform 101 may be a satellite or spacecraft bus, or vehicle platform (e.g., on a rover or the like).

The rover 101 is configured to be navigable. The system 100 may include one or more rovers 101 that transport the cargo 103. Where there is large cargo, multiple (e.g., two or more) rovers 101 may carry and move the cargo 103.

The rover 101 includes a plurality of wheels 105 (collectively referred to as the wheels 105, and generically as the wheel 105) for navigating over a surface. In an embodiment, the rover 101 includes four wheels 105a-105d, 105a and 105b shown in Figure 1. The rover 101 may be configured in a plurality of modes of operation, including autonomous platform/vehicle navigation and guidance (AutoNav), platform/vehicle teleoperation, autonomous or teleoperated robotic manipulation, autonomous alignment to reference frames and waypoints, and teachable localization and guidance maps.

The robotic system 100 includes a robotic manipulator 102. The robotic system 100 includes an end effector 104 coupled to the free end of the robotic manipulator 102. The robotic manipulator 102 manipulates, moves, and positions the end effector 104. The end effector 104 is movable and functions in three degrees of freedom (e.g., roll, pitch, yaw) for modules attached to the end effector 104. The end effector 104 includes an active separable payload interface for attaching to the cargo module 108.

The robotic system 100 further includes a sensor module 118. The sensor module is coupled to the rover 101 via a separable payload interface on a deck-side 122 of the rover 101. The sensor module 118 is configured to be removable from the rover 101 and is couplable to the end effector 104. The end-effector 104 functions as a positionable roll-pitch-yaw unit for the sensor module 118. The end-effector 104 may be a 5 degree of freedom positioner including, for example, cartesian coordinates and pan/tilt.

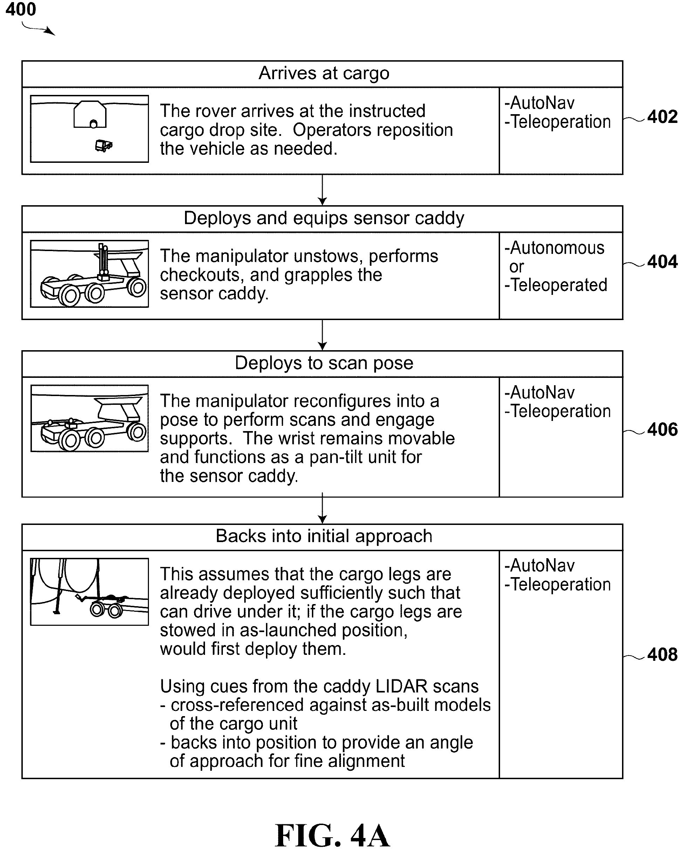

In operation, the robotic system 100 moves the robotic manipulator 102 to pick up and deploy the sensor module 118 with the end effector 104 (see, for example, Figures 4A-4C). The robotic manipulator 102 moves the sensor module 118 to point towards an area of interest 103 on a worksite, such as a cargo module on the surface of the Moon. The robotic system 100 surveys the area of interest 103 with the sensor module 118.

The sensor module 118 senses the area of interest 103 to enable the robotic system 100 to perform fine alignment of the position of the robotic system 100 at the area of interest 103. The sensor module 118 provides a proper, safe approach to survey and navigation by the robotic system 100.

The sensor module 118 is configured to provide sufficient and necessary measurements of the relative position of the cargo module 108 to the sensor module 118. The rover/platform can then transform (mathematically) that measurement into the relative position between the cargo module 108 and the connection point 106 (cradle).

The sensor module 118 is configured to provide clearance and obstacle detection information for safety and operational planning.

The robotic system 100 may include a camera module attached to the robotic arm for obtaining visual data of the site. The camera module may include lidar and/or a non-contact sensor. The robotic system 100 may include a camera vision system 116 for imaging an environment that the robotic system 100 is in. The camera vision system 116 provides image data to a control device of the robotic system 100 that allows the end effector 104 to be positioned.

The robotic system 100 performs fine alignment of its position at the worksite while measuring the area of interest 103 using the sensor module 118. The robotic system further uses the camera vision system 116 for performing navigation during fine alignment. The area of interest 103 may be a cargo module, such as cargo module 108. The robotic system 100 performs fine alignment of the position of the rover 101 along direction 120 towards the cargo module 108. The robotic system 100 is configured to verify alignment using visual feedback from the camera vision system 116, cross-referenced against fiducials on the cargo module 108 and actuators of the cargo module 108.

The robotic system 100 is configured to back into position along the direction 120 to provide an angle of approach for fine alignment using cues from lidar scans of the sensor module 118, cross-referenced against fiducial markings and/or as-built modules of the cargo module 108. The rover 101 uses odometry and machine vision cues to back into a capture envelope beneath the cargo module 108. The robotic manipulator 102 may be redeployed and used to inspect alignment as needed.

In an embodiment, the cargo module 108 includes a plurality of actuators 111a-111d (collectively referred to as the actuators 111, and generically as the actuator 111). The actuators 111a-111b on one side of the cargo module 108 are shown in Figure 1, while the actuators 111c-111d are not shown. In an embodiment, the robotic system includes four actuators 111.

The actuators 111a-111d are extendable from and retractable to a plurality of actuator sheaths 113a-113d (collectively referred to as the actuator sheaths 113, and generically as the actuator sheath 113). The actuators 111 are configured to reposition the height of the cargo module 108 such that the cargo module 108 can be lowered or raised as the actuators 111 retract and extend. The actuators 111 are configured to retract to lower the cargo module 108 onto the rover 101.

The actuators 111a-111d include standing pads 115a-115d (collectively referred to as the standing pads 115, and generically as the standing pad 115). The standing pads 115 are configured to balance the cargo module 118 on the surface when the actuators 111 are extended to support the cargo module 118 on the surface.

After completing fine alignment maneuvering and reaching the cargo module 108, the robotic system 100 moves robotic manipulator 102 to put away the sensor module 118. The robotic system 100 further moves such that the rover 101 is positioned to sit below the cargo module 108. In an embodiment, the sensor module 118 is stowed after referencing the worksite and before it moves on final approach to position the vehicle under the cargo module 108. The robotic manipulator 102 may be stowed to fit under the deployable legs of the cargo module 108 so that it can then access the module's separable payload interface.

Initially the rover 101 may position beside the cargo 103 that is on the ground with the legs 111a, 111b, retracted. The arm 102 can be connected to the cargo 103 to extend the legs 111a, 111b, so that there is space for the rover 101 to drive under the cargo 103. Then the rover 101 drives under the cargo 103. The system 100 may not assume that the legs 111a, 111b, are initially extended.

The cargo module 108 further includes a connection point 106 for coupling the end effector 104. The connection point 106 sits at an underside of the cargo module 108. The connection point 106 may be directly on the side or front and back of the cargo module 108. The connection point 106 includes a passive separable payload interface for attaching to an active separable payload interface, or other similar interface.

The robotic system 100 moves the robotic manipulator 102 to attach the end effector 104 to the connection point 106. The robotic system 100 provides communication with and power supply to the cargo module 108 when the end effector 104 is coupled to the connection point 106. The connection point 106 includes a passive separable payload interface for attaching to an active separable payload interface of the end effector 104.

The robotic system 100 is configured to verify successful connection of the end effector 104 to the connection point 106. The end effector 104 may signal positive connection and pre-load. The end effector 104 includes a Force Moment Sensor (FMS) configured to obtain readings on the end effector 104. The robotic system 100 monitors the readings to verify the point in which the cargo module 108 is loaded on the rover 101. In an embodiment, such verification is performed by Ready-to-latch (RTL) switches. RTLs may be used to indicate that the active side is in the correct position to latch. In this embodiment, visual feedback may be used (e.g., space vision marker targets). Actual latching may be detected by switches internal to the end effector 104.

The robotic system 100 is configured to command the actuators 111 to retract and lower the cargo module 108 when the end effector 104 is coupled to the connection point 106. The cargo module 108 is lowered to sit on top of a cradle of the rover 101 within a capture envelope. The connection point 106 provides a redundant signal to measure how the actuators 111 are retracting such that the cargo module 108 is positioned in a controlled manner at the correct angle into the capture envelope. The robotic manipulator 102 may provide a redundant measurement of the positioning of the cargo module 108 as the cargo module 108 is being lowered into the cradle.

The cradle of the rover 101 is configured to resolve up to ±10 cm of lateral misalignment in the 3 axis (roll, pitch, yaw) and ±5° of wobble as the cargo module 108 is lowered. After the module is lowered on the rover, hold downs may be engaged before the rover 101 moves.

In an embodiment, the robotic system 100 includes a radio module (e.g., wifi) for communicating with the cargo module 108.

Once the cargo module is positioned to sit on top of the rover 101, the robotic system 100 assesses the power, telemetry, and state of health of any one or more parameters via the connection point 106. The parameters may include any one or more of temperature, temperature history, internal pressure, battery levels, dosimetry, shock levels, and state of redundant functions. The parameters may include attitude (roll, pitch) with respect to the rover 101 and ground. The cargo 103 may have motors but no power. The cargo 103 may have sensors that tell where the cargo legs 111a, 111b are extended. The cargo 103 might have some complexity. The cargo 103 may have basic electronics to capture simple sensors.

In an embodiment, the robotic system 100 includes a control device 110 executing control software for controlling movement of the robotic manipulator 102. The control device 110 is draw in dashed lines to indicate that it is not attached to the top of the rover 101. The robotic manipulator 102 includes booms 112-1, 112-2 and joints 114-1, 114-2, and 114-3. Generally, the control device 110 controls movement (e.g., rotation) of the joints 114-1, 114-2, and 114-3, thereby enabling controlled movement of the robotic manipulator 102 and ultimately of end effector 104. The manipulator 102 and control device 110 are communicatively connected and the connection is represented as a hashed line between the manipulator 102 and control device 110.

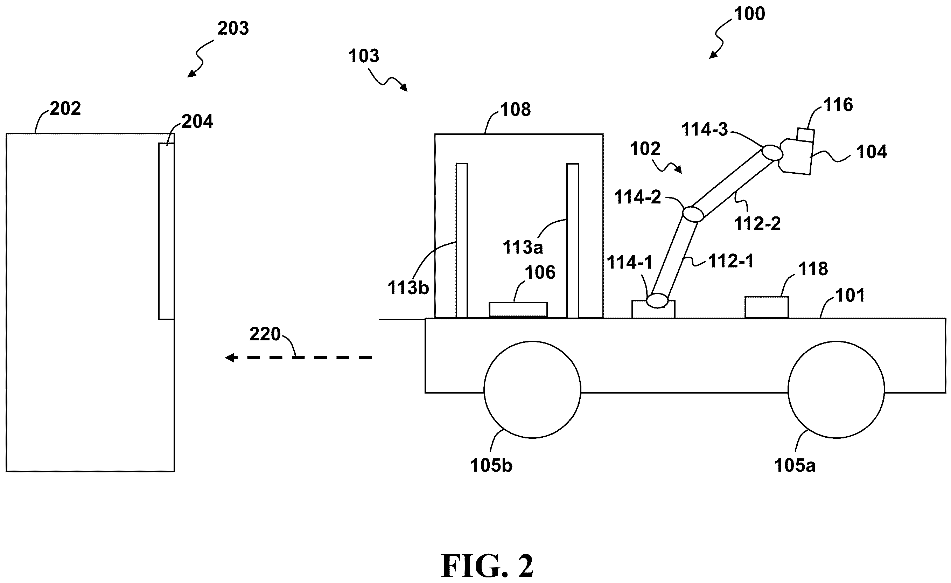

Referring now to Figure 2, shown therein is a robotic system 100 for berthing a cargo module to a habitat.

The robotic system 100 moves the cargo module 108 across a worksite to another location, such as a habitat 202. The habitat 202 attaches to the cargo module 108 via connection point 204. The standing pads 115 of the cargo module 108 have been omitted from Figure 2.

Once in close proximity to the habitat 202, the robotic system 100 deploys the sensor module 118 for fine alignment of the position the robotic system 100 with the habitat 202. The robotic manipulator 102 moves the sensor module 118 to point towards area of interest 203, such as the habitat 202. The robotic system 100 surveys the area of interest 203 with the sensor module 118.

The robotic system 100 moves towards the habitat 202 along direction 220 to perform the fine alignment. The robotic system 100 moves the rover 101 such that the cargo module 108 is positioned from the connection point 204.

The robotic system 100 uses the camera vision system 116 and the sensor module 118 to inspect the relative poses between the habitat 202 and the connection point 204. The robotic system 100 stows the sensor module 118 when the cargo module 108 is in position. The platform may use uses the sensor module 118 to make sure that the cargo module 108 is positioned correctly with respect to the habitat 202 for final approach and that the worksite is clear of obstacles or hazards. The sensor module 118 is stowed and the system proceeds using core platform navigation sensors.

The robotic system 100 moves the robotic manipulator 102 such that the end effector 104 attaches to the connection point 106 of the cargo module 108. The cargo module 108 deploys the actuators 111 onto the surface to support the cargo module 108. The actuators 111 further lift the cargo module 108 off the rover 101. The actuators 111 support and stabilize the cargo module 108 such that the habitat 202 can deploy the connection point 204 and attach to the cargo module 108. The platform 101 provides the commanding of the cargo function. The computer on the platform 101 makes the decisions or adjustments to the cargo module 108, including the positioning of the legs on an uneven surface under variable surface conditions.

The robotic manipulator 102 on the rover 101 may take as much of the smart components from the cargo 103, to make the cargo 103 more light weight and/or less complex. The arm 102 may be used to provide power and data to the interface 106.

The cargo legs 111a, 111b may be simple and not have electronics or power. The cargo legs 111a, 111b may not have extra handling system to put the cargo 108 on the rover 101.

In addition the system 100 may not assume that the cargo legs 111a, 111b are extended. The cargo 103 may be dropped and in a stowed configuration for rocket transport. The rover 101 approaches the cargo 103, scans, connects the arm 102, and the cargo 103 is in a ready to received position. Once the legs 111a, 111b, are deployed, the cargo 108 is lifted, the arm 102 is disconnected, the rover 101 moves under and is aligned with the cargo 103. The arm 102 is reconnected to lower the cargo 103. Hold down mechanisms and the cargo 103 are connected to the rover 101.

In some cases, the system 100 may include shorter cargo 103. The arm 102 connects to the interface 106, the cargo 103 is captured, and the cargo 103 is constrained. The arm 102 is detached from the cargo 103 and stowed. The rover 101 moves out and about, and the cargo is transported. The rover 101 may transport the cargo to a habitat or another structure.

The rover 101 may have autonomy. The rover 101 may position the cargo 103 against the desired structure. The arm 102 is deployed and referees operation. The interface 106 connects. The legs 111a, 111b extend. The hold down mechanisms are released. The legs 111a, 111b extend while the arm 102 is still connected to the cargo 103. The legs 111a, 111b extend sufficiently. The rover 101 moves out. The arm 102 disconnects. The arm 102 may still reach into the interface 106. The arm 102 may connect again. The cargo legs 111a, 111b may be manipulated to be properly aligned. cargo legs 111a, 111b may move lower, change pitch and roll, and connect to the habitat.

Once aligned, the rover 101 disconnects the arm 102. The arm camera and/or rover lidar may inspect to see if the cargo 103 is positioned correctly. If so, then the operation is complete.

The robotic arm 102 on a movable piece of surface infrastructure (rover 101) provides utilities (for example, command data and telemetry). The system 100 may provide robotically actuated payload utilities. The robotic arm 102 may provide any one or more of command data, telemetry, power, torque, pressurant, and coolant based on the desired outcomes. The device(s) 103 that are on the payload (e.g., extensible legs 111a, 111b) may be any number of subsystems that are enabled by the utility robot 102. For example, the subsystems may include any one or more of an antenna deployment on an array of pseudolites, and emergency actuation of control drums.

In order to handle (capture, deploy) large payloads 103, the lunar rover 101 is equipped with the robotic manipulator 102 capable of providing power and data passthrough via robotic interfaces/grapple fixtures 104, 106. The passive interface 106 on the payload 103, such as a cargo container or habitat, allows the manipulator/host system to control actuatable legs 111a, 111b for precise positioning. This may provide precise 3DOF (pitch, roll, height) of the payload 103 which can be used to align for capture by the rover 101 or an external active berthing interface. Depending on the implementation of the legs 111a, 111b, specifically, control could be 6DOF by coordinating the motion of each leg, similar to how a Stewart platform works. Position feedback may be provided by a combination of load sensors on the manipulator 102 and/or rover 101 as well as the registration of visual fiducials on the legs 111a, 111b as resolved by situational awareness cameras 116 on the rover 101.

The system 100 may provide for precise handling of large payloads, including those otherwise too large to directly position/reorient with a dexterous robot. The system 100 may provide for an end-to-end solution for large payload logistics on the lunar surface.

The system 100 may provide a self-contained (no reliance on external elements, e.g. crane) for handling large payloads on the lunar surface, which remains a gap in conventional Moon-to-Mars architectures.

The cargo 103 may include a plurality of distance sensors that measures how far the cargo 108 is from the rover 101. A distance sensor may also measure horizontally how far away the cargo 103 is from a structure. A distance sensor on the legs 111a, 111 may measure the position of the legs. The sensors may include IMU/accelerometer in cargo 103 that provides basic orientation, to help the legs 111a, 111b extend in in uneven terrain.

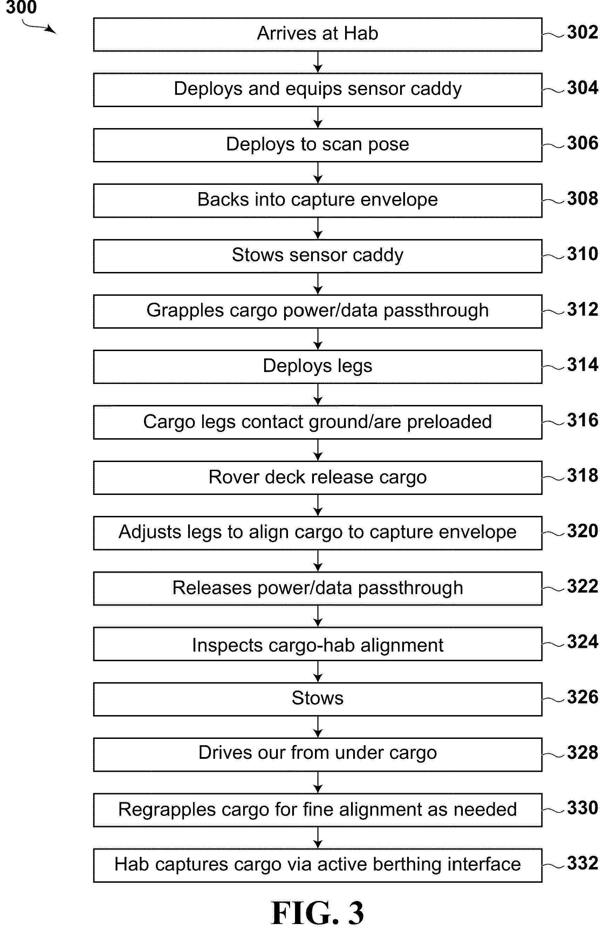

Referring now to Figure 3, shown therein is a method 300 of positioning a cargo module payload for capture by a habitat. The method may be performed by the robotic system 100 of Figure 1.

At 302, the method 300 includes arriving at a habitat by driving a robotic system to the habitat, such as the robotic system 100 arriving at the habitat 202 of Figure 2,

At 304, the method 300 includes deploying a robotic arm to equip a sensor module. The robotic system 100 is configured to deploy the robotic manipulator 102 to equip the sensor module 118.

At 306, the method 300 includes deploying a robotic arm to scan a pose. The pose is scanned by the sensor module 118.

At 308, the method 300 includes backing the robotic system into a capture envelope with Auto Align. Auto Align comprises a mode of operation of a rover of the robotic system wherein the rover is configured to back into position to provide an angle of approach for fine alignment, using cues from the sensor module cross-referenced against built-in models of the cargo module payload. The capture envelope is a volume defined with position and orientation ("pose"). The cargo module is moved into position, within acceptable thresholds of orientation so that the cargo module can be interfaced with the habitation module. The rover is situated adequately to unload the cargo into the right place.

At 310, the method 300 includes deploying the robotic arm to stow away the sensor module.

At 312, the method 300 includes grappling, with the robotic arm, a cargo module at a connection point configured to provide power and data to the cargo module by the robotic system.

At 314, the method 300 includes deploying legs of the cargo module. The legs are actuators, such as the actuators 111 of Figure 1, configured to support the cargo module on a surface.

At 316, the method 300 includes contacting the pads with the surface and then controlling the extension until the legs are preloaded and the cargo module is stably positioned. Preloaded indicates that the legs are all bearing the same effective load (e.g., the module will be "level"), since the legs are spaced evenly in this embodiment. The module may be leveled when the roll and pitch of the module are close to zero. The legs may be extended and retracted by different amounts to achieve this, for example, in uneven terrain. So the cargo module may be statically balanced and will not shift, sink, and/or subside into a non-level pose. The arm kinematics provide a redundant measure of the relative position of the module to the rover/platform.

At 318, the method 300 includes releasing active separable payload interfaces on the rover of the robotic system to release the cargo module.

At 320, the method 300 includes adjusting the legs to align the cargo module to a capture environment. This function may be accomplished by a processor on the platform/rover side issuing commands through the separable payload interface on the cargo module to the motor controllers on the leg actuators.

At 322, the method 300 includes releasing the robotic arm at the connection point to release power and data.

At 324, the method 300 includes inspecting alignment of the cargo module with respect to the habitat using the robotic arm.

At 326, the method 300 includes stowing away the robotic arm.

At 328, the method 300 includes driving the robotic system out from under the cargo module.

At 330, the method 300 includes grappling the cargo module with the robotic arm for fine alignment. Final adjustments may be made to the leg extension lengths/forces to finely adjust alignment for capture of the cargo module via the habitat active berthing interface. In an embodiment, the teleoperated robotic manipulation grapples the habitat via a different separable payload interface and actuate the berthing mechanism.

The system, having a logistics/utility platform, may reconfigure devices, that do not have built-in control hardware and software, ground infrastructure modules by grasping a standardized interface and controlling the motor controllers or other similar equipment on board the modules.

At 332, the method 300 includes capturing the cargo module by the habitat via an active berthing interface. The active berthing interface is an embodiment of the connection point 204 of Figure 2.

Referring now to Figures 4A-4C, shown therein is a method 400 of capturing a cargo module payload. The method may be performed by the robotic system 100 of Figure 1.

Referring now to Figure 4A. At 402 the method 400 includes arriving at a cargo module by a rover of a robotic system.

At 404, the method 400 includes deploying a robotic arm and equipping a sensor module to the robotic arm. The robotic arm further performs checkouts.

At 406, the method 400 includes deploying the robotic arm to scan pose. The scanning is measuring at the relative positioning of the cargo module and the habitat prior to final adjustment. The robotic arm reconfigures into a pose to perform scans and engages supports. The end-effector of the robotic arm remains movable and functions as a pan-tilt unit for the sensor module.

At 408, the method 400 includes backing the rover into initial approach. At 408, the rover is in Auto Align mode of operation. At 408, the legs of the cargo module are already deployed sufficiently such that the robotic system can drive under the cargo module. If the legs of the cargo module are stowed in as-launched position, the robotic system would first deploy the legs as per 328 and 330 of Figure 3. The robotic system backs into position to provide an angle of approach for fine alignment using cues from lidar scans of the sensor module, cross-referenced against as-built modules of the cargo module.

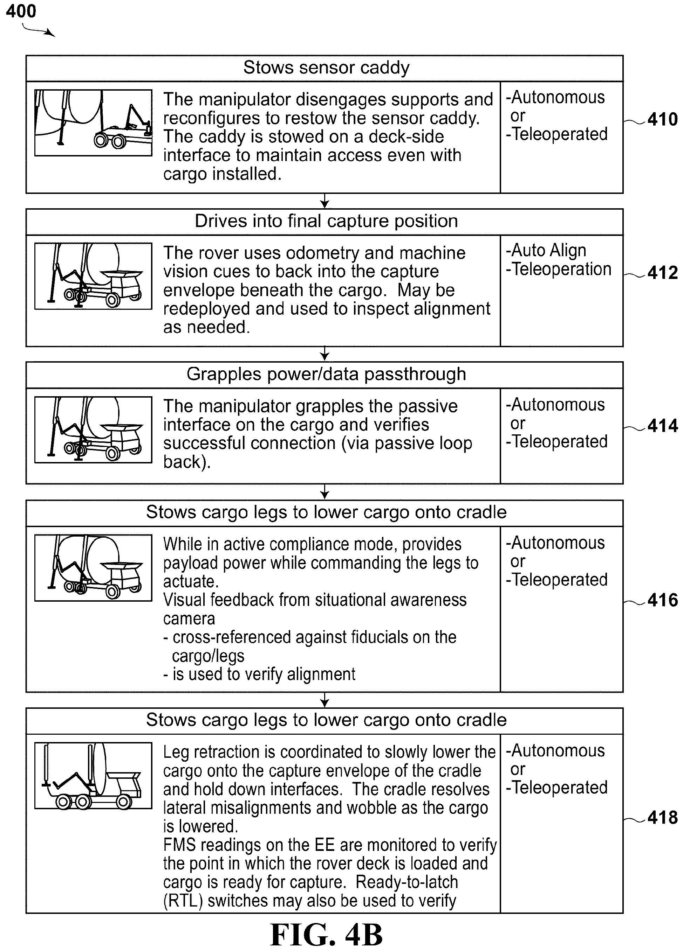

Referring now to Figure 4B. At 410, the method 400 includes stowing the sensor module using the robotic arm. The robotic arm disengage supports and reconfigures to restow the sensor caddy. The caddy is stowed on a deck-side separable payload interface to maintain access even with cargo installed.

At 412, the method 400 includes driving the rover into final capture position. The rover uses odometry and machine vision cues to back into the capture envelope beneath the cargo. The robotic arm may be redeployed and used to inspect alignment as needed.

At 414, the method 400 includes grappling the cargo module with the robotic arm at a connection point, to provide power and data passthrough to the cargo module. The robotic arm grapples the passive separable payload interface on the cargo module and verifies successful connection (via passive loop-back).

At 416, the method 400 includes stowing legs of the cargo module to lower the cargo module onto a cradle of the rover. While in active compliance mode, the robotic arm provides the cargo module with power while commanding the legs of the cargo module to actuate. Alignment is verified using visual feedback from situational awareness cameras of the robotic system, cross-referenced against fiducials on the cargo module and the legs.

At 418, the method 400 includes completing lifting the legs of the cargo module and placing the cargo module on the cradle. Retraction of the legs is coordinated to slowly lower the cargo module into the capture envelope of the cradle and hold down separable payload interfaces. The cradle resolves up to ±10 cm of lateral misalignment and ±5° of wobble as the cargo module is lowered.

Force Moment Sensor (FMS) readings on the end effector of the robotic arm are monitored to verify the point in which the rover is loaded, and the cargo module is ready for capture. Ready-to-latch (RTL) switches may also be used to verify.

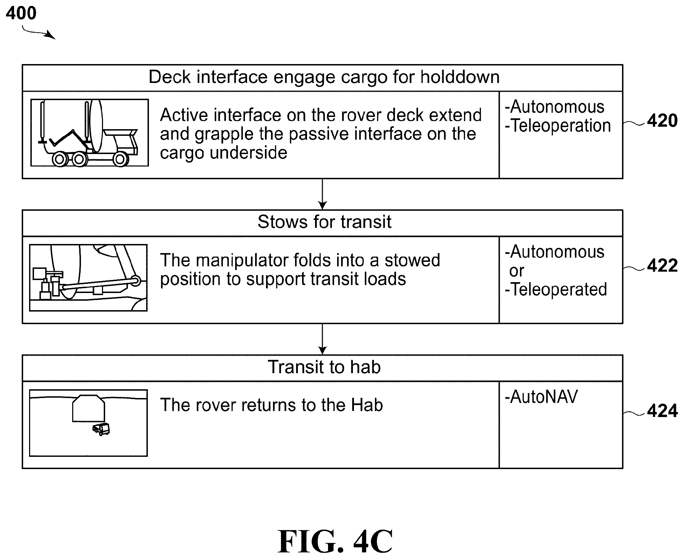

Referring now to Figure 4C. At 420, the method 400 includes engaging the cargo module with separable payload interfaces of the rover. Active separable payload interfaces on the rover deck extend and grapple the passive separable payload interfaces on the underside of the cargo module.

At 422, the method 400 includes stowing the robotic arm for transit. The robotic arm folds into a stowed position to support transit loads.

At 424, the method 400 includes transmitting the robotic system to a habitat.

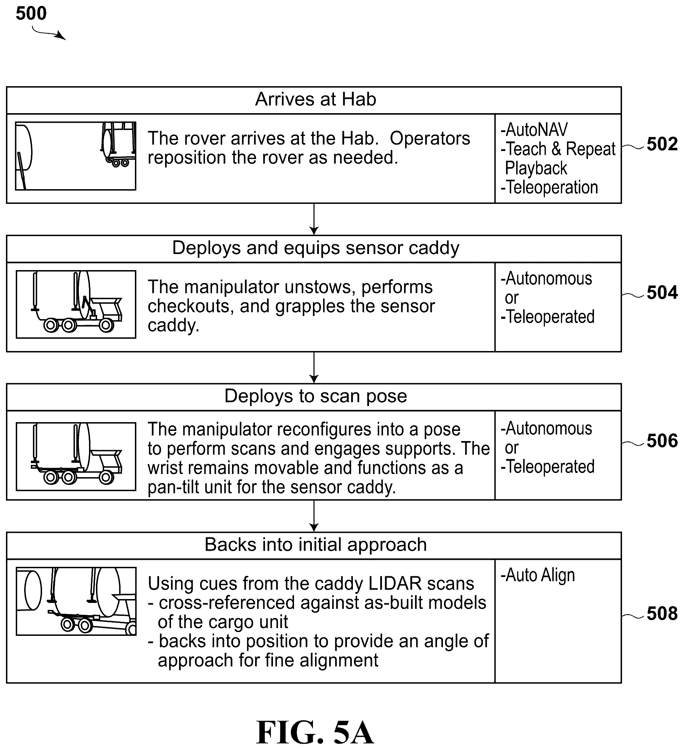

Referring now to Figures 5A-5D, shown therein is a method 500 of berthing a cargo module to a habitat. The method may be performed by the robotic system 100 of Figure 2.

Referring now to Figure 5A. At 502 the method 500 includes arriving at a habitat by a rover of a robotic system having a cargo module thereon. Operators reposition the rover as needed.

At 504, the method 500 includes deploying a robotic arm of the robotic system and equipping a sensor module to the robotic arm. The robotic arm further performs checkouts. Checkouts are a set of internal checks to ensure that the robotic systems is functional and has error-free calibrations and functionally redundant strings available. The system may have self-confirmation that function, performance, and hazard controls are all in place.

At 506, the method 500 includes deploying the robotic arm to scan pose. The robotic arm reconfigures into a pose to perform scans and engages supports. The end effector of the robotic arm remains movable and functions as a pan-tilt unit for the sensor module.

At 508, the method 500 includes backing the rover into initial approach. At 408, the rover is in Auto Align mode of operation. The robotic system backs into position to provide an angle of approach for fine alignment using cues from lidar scans of the sensor module, cross-referenced against as-built modules of the cargo module.

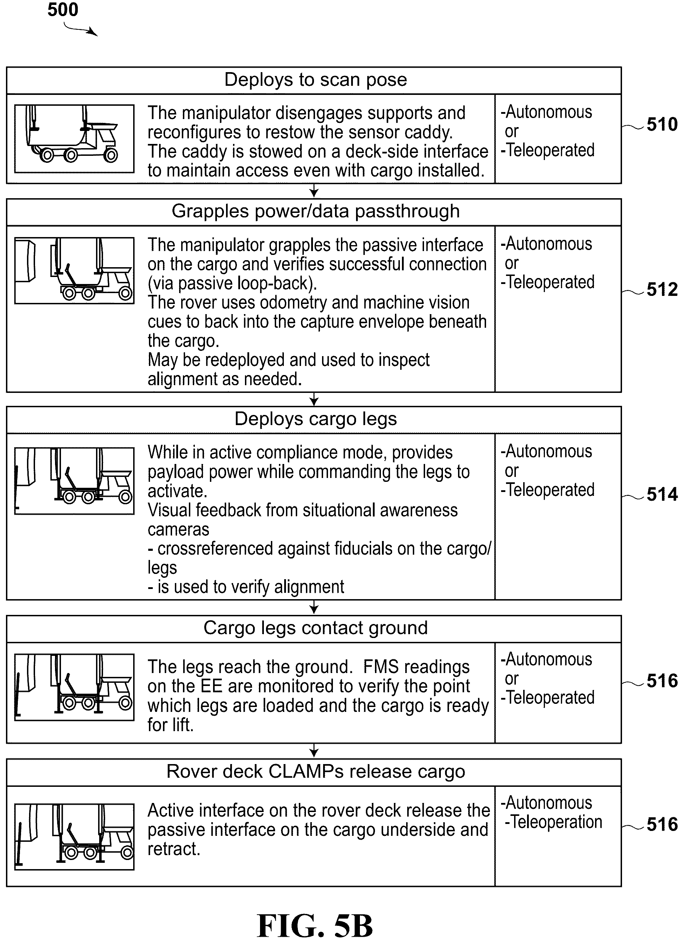

Referring now to Figure 5B. At 510, the method 500 includes stowing the sensor module using the robotic arm. The robotic arm disengages supports and reconfigures to restow the sensor module. The sensor module is stowed on a deck-side separable payload interface to maintain access even with the cargo module installed.

At 512, the method 500 includes grappling a connection point on the cargo module with the robotic arm. Grappling the connection point with the robotic arm provides power and data passthrough to the cargo module. The robotic arm grapples the passive separable payload interface on the cargo and verifies successful connection (via passive loop-back). The rover uses odometry and machine vision cues to back into the capture envelope beneath the cargo. The robotic arm may be redeployed and used to inspect alignment as needed.

At 514, the method 500 includes deploying legs of the cargo module using the robotic arm. While in active compliance mode, the robotic arm provides power to the cargo module while commanding the legs of the cargo module to actuate. Alignment is verified using visual feedback from situational awareness cameras of the robotic system, cross-referenced against fiducials on the cargo module and legs.

At 516, the method 500 includes contacting the legs with a surface. The legs of the cargo module reach the ground. FMS readings on an end effector of the robotic arm are monitored to verify the point which legs are loaded and the cargo is ready for lift.

At 518, the method 500 includes releasing the cargo module. Active separable payload interfaces on the rover release the passive separable payload interfaces on the cargo module underside and retract.

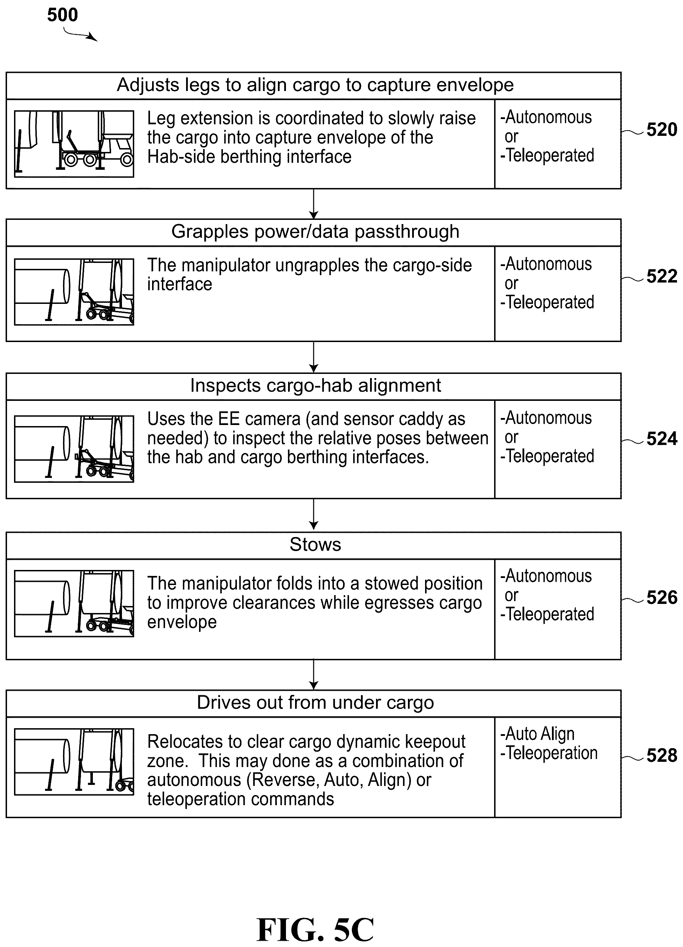

Referring now to Figure 5C. At 520, the method 500 includes adjusting the legs of the cargo module using the robotic arm and aligning the cargo module to a capture envelope.

At 522, the method 500 includes releasing the robotic arm at the connection point to release power and data passthrough.

At 524, the method 500 includes inspecting alignment of the cargo module with the habitat using the robotic arm. The robotic arm uses the end effector camera, and sensor module as needed, to inspect the relative poses between the habitat and the cargo berthing interface.

At 526, the method 500 includes stowing the robotic arm. The robotic arm folds into a stowed position to improve clearances while the robotic system egresses the cargo envelope.

At 528, the method 500 includes driving the rover out from under the cargo module. The robotic system relocates to clear the cargo dynamic keep-out zone. This may be done as a combination of autonomous (reverse Auto Align) or teleoperation commands.

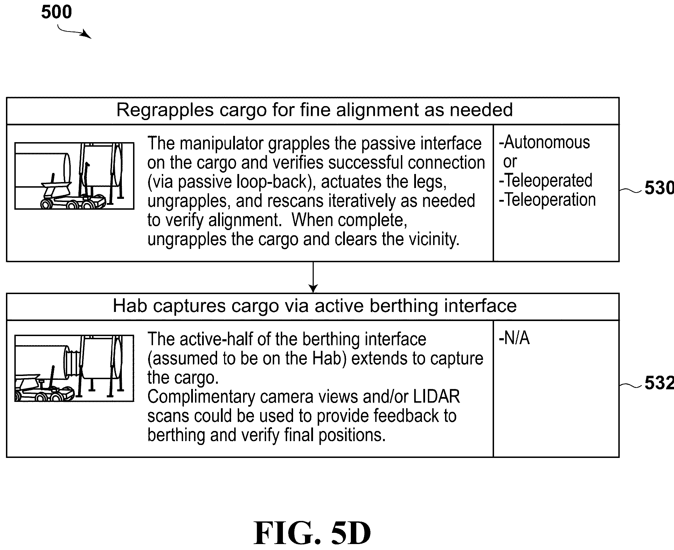

Referring now to Figure 5D. At 530, the method 500 includes re-grappling the cargo module by the robotic arm for fine alignment. The robotic arm grapples the passive separable payload interface on the cargo module and verifies successful connection (via passive loop-back). The robotic arm actuates the legs of the cargo module, releases from the cargo module, and rescans iteratively as needed to verify alignment. When complete, the robotic arm releases the cargo module and the robotic system clears the vicinity.

At 532, the method 500 includes capturing the cargo module with the habitat. The habitat captures the cargo module using an active berthing interface. The active half of the berthing interface (assumed to be on the habitat) extends from the habitat to capture the cargo module. Complementary camera views and lidar scans could be used to provide feedback to berthing and verify final positions.

While the above description provides examples of one or more apparatus, methods, or systems, it will be appreciated that other apparatus, methods, or systems may be within the scope of the claims as interpreted by one of skill in the art.

## Claims

1. A system for positioning a payload, the system comprising:
a rover configured to travel to a site and hold the payload;
a sensor module attached to the rover for obtaining sensor data of the site; and
a robotic arm for:
equipping and stowing away the sensor module;
attaching to a connection point of the payload; and
controlling a position of the payload when attached to the connection point.

2. The system of claim 1 further comprising a camera module attached to the robotic arm for obtaining visual data of the site.

3. The system of claim 1 further comprising a control system for performing navigation of the rover based on the sensor data and the visual data.

4. The system of claim 1, wherein the connection point provides power and data.

5. The system of claim 1, wherein the robotic arm includes an end effector for attaching the sensor module.

6. The system of claim 1, wherein the capture envelope is underneath the payload.

7. The system of claim 1, wherein the payload includes a cargo module that has cargo legs for raising or lowering the cargo module; and/or
wherein the cargo module includes sensors that indicate an extension of the cargo legs.

8. The system of claim 1, wherein the robotic arm does not take the load of the payload; and/or
wherein the robotic arm provides a redundant measurement of relative payload pose with respect to the platform.

9. The system of claim 1, wherein the robotic arm assesses any one or more of power, telemetry, and state of health of any one or more parameters via a connection point; and/or
wherein the parameters include any one or more of temperature, temperature history, internal pressure, battery levels, dosimetry, shock levels, and state of redundant functions; and/or
wherein the parameters include attitude (roll, pitch) with respect to the rover and ground.

10. The system of claim 1, wherein the payload includes motors but no on board power.

11. The system of claim 1 further comprising two or more rovers that transport a one payload.

12. A method for acquiring the payload with the system of claim 1, the method comprising:
attaching the sensor module to the robotic arm;
acquiring a pose of the payload using the sensor module;
moving the system into a capture envelope of the payload based on the pose of the payload;
stowing away the sensor module;
grappling the payload with the robotic arm at the connection point; and
lowering the payload onto the system.

13. The method of claim 12, wherein the payload includes legs for raising or lowering the payload; and/or
wherein the payload includes sensors that indicate an extension of the legs.

14. A method for berthing a cargo module to a habitat on a surface, the method comprising:
arriving at the habitat by a robotic system, wherein the cargo module is coupled to the robotic system;
attaching a sensor module to a robotic arm of the robotic system;
acquiring a pose of the habitat using the sensor module;
moving the robotic system into a capture envelope of the habitat based on the pose of the habitat;
stowing away the sensor module;
grappling the cargo module with the robotic arm at a connection point of the cargo module;
deploying legs of the cargo module, wherein the legs are configured to support the cargo module on the surface;
releasing the cargo module at the connection point; and
inspecting alignment of the cargo module and the habitat.

15. The method of claim 14, wherein the robotic arm provides a redundant measurement of relative cargo module pose with respect to a platform.
